# EUROPÄISCHE PATENTANMELDUNG

(11) **EP 4 082 647 A1**
(43) Veröffentlichungstag der Anmeldung: **02.11.2022**
(21) Anmeldenummer: 22170351.5
(22) Anmeldetag: 27.04.2022
(51) Int. Cl.: B01D 35/02, C01F 1/00

(54) **FILTERSYSTEM FÜR FRISCHWASSERTANKS VON FAHRZEUGEN**

(30) Priorität: 28.04.2021 DE 202021102293 U
(71) Anmelder: Blaufaktor GmbH & Co KG, 78607 Talheim Baden-Württemberg (DE)
(72) Erfinder: Müller, Tobias, 78652 Deisslingen (DE)
(74) Vertreter: Tahhan, Nader Isam Mark

(57) **Zusammenfassung**

Die Erfindung betrifft das Gebiet der Verschlusseinrichtungen für Flüssigkeitstanks von Fahrzeugen. Insbesondere betrifft die Erfindung das Gebiet der Filtersysteme für Wassertanks von Wohnmobilen, Wohnwagen, Expeditionsfahrzeugen und dergleichen.

Das Filtersystem (1) für den Frischwassertank (2) eines Fahrzeugs umfasst einen Filter (3) zum Zurückhalten und/oder Neutralisieren von im zuzuführenden Wasser (W) enthaltenen unerwünschten Inhaltsstoffen, sowie ein diesen Filter (3) umgebendes, einen Einlass (5) und einen Auslass (6) aufweisendes Gehäuse (4), und ist dadurch gekennzeichnet, dass das Gehäuse (4) dazu eingerichtet ist, unmittelbar mit der Einfüllöffnung (7) des Frischwassertanks (2) lösbar verbunden zu werden, so dass der Filter (3) unmittelbar vor dem Eintritt des zuzuführenden Wassers (W) in den Frischwassertank (2) mit diesem durchströmbar ist.

Die Erfindung betrifft auch ein Verfahren zum Entfernen von unerwünschten Inhaltsstoffen aus einem einen Frischwassertank (2) befüllenden Frischwasserstrom unter Verwendung eines solchen Filtersystems (1).

## Beschreibung

### Einleitung

Die Erfindung betrifft das Gebiet der Verschlusseinrichtungen für Flüssigkeitstanks von Fahrzeugen. Insbesondere betrifft die Erfindung das Gebiet der Filtersysteme für Wassertanks von Wohnmobilen, Wohnwagen, Expeditionsfahrzeugen und dergleichen.

### Stand der Technik und Nachteile

Flüssigkeits- wie insbesondere Wassertanks von Fahrzeugen sind aus dem Stand der Technik wohlbekannt. Letztere dienen dem Speichern und Mitführen von Wasser. Dieses wird dem Tank über einen Eingang zugeführt, der mittels eines Tankdeckels verschließbar ist. Je nach Einsatzgebiet wird das Wasser dann in einem System umlaufend gefördert, von wo aus es wieder in den Tank gelangt (Kühlsystem), oder es wird dem Tank nach und nach entnommen (Brauchwasserspeicher für Wasch- und Trinkwasser).

Im einfachsten Fall wird das Ende eines Frischwasser führenden Schlauches einfach in den Eingang des Tanks gehängt. Problematisch ist der Fall, wenn Verunreinigungen in den Tank gelangen, da dies dann das Kühlsystem bzw. Trinkwasserrohrsystem schädigen und zu technischen bzw. gesundheitlichen Problemen führen kann. Hierzu hält der Stand der Technik Anschlussstücke bereit, welche nach dem Entfernen des Tankdeckels an dessen Stelle dichtend am Tank angebracht werden, beispielsweise mittels eines Schraub- oder Bajonettverschlusses. Auf diese Weise wird das Eindringen von Schmutz und Staub während des Befüllvorgangs vermieden.

Eine andere Situation ergibt sich jedoch, wenn das einzufüllende Wasser selber bereits verunreinigt ist. Zu solchen Verunreinigungen zählen insbesondere Keime und Bakterien, Rohrablagerungen entstammende Sedimente aus Rost oder Schwermetallen, Schwebeteilchen wie Sand oder Erde, gelöste Stoffe wie Chlor oder Fluoride, sowie Mikroplastik. Die Gefahr des Einfüllens verunreinigten Wassers besteht insbesondere dann, wenn es sich bei der Quelle um eine nicht kontrollierte Wasserstation oder gar oft sehr sedimentbelastetes Fluss- oder Seewasser handelt, was verhältnismäßig häufig der Fall ist.

Hierfür sind aus dem Stand der Technik dem Wassertank nachgeordnete Filter bekannt, welche das Wasser vor dem endgültigen Verbrauch von Partikeln und/oder Schadstoffen reinigen. Der Nachteil derartiger Filter ist, dass sie nicht verhindern, dass der Wassertank selber mit unerwünschten Stoffen belastet ist, welche sich in diesem anlagern und ihn dauerhaft schädigen können. Zudem ist der zum Einbau benötigte Platz nicht immer vorhanden, was zudem auch den Austausch der typischerweise vorhandenen Filterkartuschen erschwert.

Um das Einfüllen verunreinigten Wassers in den Wassertank von vornherein auszuschließen, sind vorgelagerte, in einen Befüllschlauch eingefügte Befüllfilter bekannt, welche dafür sorgen, dass die unerwünschten Bestandteile gar nicht erst in den Wassertank gelangen. Beispielsweise zeigt Druckschrift US 4 776 956 A ein Wassergefäß mit einen Griff, in welchem ein Filter eingebaut ist. Das den Griff durchströmende Wasser gelangt nach der Reinigung aus den stromabwärts gelegenen Ende des Griffes in das Gefäß. Ein Nachteil solcher Systeme aus Befüllschlauch und Befüllfilter ist, dass sie nach dem Gebrauch entleert werden müssen, um ein Verkeimen zu verhindern. Auch das jeweils nötige Anschließen und Abkoppeln des Befüllschlauches vom externen Befüllsystem ist mit entsprechendem Aufwand verbunden. Bei der Handhabung ist darauf zu achten, die Anschlüsse des Befüllschlauches nicht zu verschmutzen. Zudem müssen die Filter zusammen mit dem Befüllschlauch bei Nichtbenutzung zwischengelagert werden, was insbesondere im Hinblick auf den begrenzten Stauraum von Wohnmobilen oder Caravans oft problematisch ist.

### Aufgabe der Erfindung und Lösung

Der Erfindung liegt demnach die Aufgabe zugrunde, eine Vorrichtung und ein Verfahren bereitzustellen, welche bzw. welches die Nachteile des Standes der Technik vermeidet.

Demnach soll die Erfindung die Gefahr von Ablagerungen oder anderer Verschmutzungen des Wassertanks aufgrund verunreinigten Wassers verhindern. Sie soll außerdem möglichst wenig Platz benötigen, den Zeitbedarf zu ihrer Benutzung minimieren, und einfach und sicher in der Handhabung sein.

Die Aufgabe wird durch eine Vorrichtung nach Anspruch 1 sowie ein Verfahren nach nebengeordnetem Anspruch 13 gelöst. Vorteilhafte Ausführungsformen sind den jeweils abhängigen Unteransprüchen, der nachfolgenden Beschreibung sowie den Figuren zu entnehmen.

### Beschreibung

Zunächst erfolgt die Beschreibung des erfindungsgemäßen Filtersystems. Daran schließt sich die Beschreibung des erfindungsgemäßen Verfahrens an.

Das Filtersystem ist für den Frischwassertank eines Fahrzeugs vorgesehen. Das Fahrzeug ist insbesondere ein Wohnmobil, ein Wohnwagen (Caravan), oder ein anderweitiges, Frischwasser in größerem Umfang (beispielsweise 50 l, 100 l, 200 l, oder 500 l) mitführendes Gefährt.

Das Filtersystem umfasst einen Filter zum Zurückhalten und/oder Neutralisieren von im zuzuführenden Wasser enthaltenen unerwünschten Inhaltsstoffen. Derartige Inhaltsstoffe sind insbesondere Keime und Bakterien, Rohrablagerungen entstammende Sedimente aus Rost oder Schwermetallen, Schwebeteilchen wie Sand oder Erde, gelöste Stoffe wie Chlor oder Fluoride, sowie Mikroplastik.

Das Filtersystem umfasst weiter ein diesen Filter umgebendes, einen Einlass und einen Auslass aufweisendes Gehäuse. Das Gehäuse dient somit der Aufnahme des Filters in einem Innen- oder Hohlraum und ist mit Wasser durchströmbar.

Erfindungsgemäß ist das Gehäuse dazu eingerichtet, unmittelbar mit der (stromaufwärts vom eigentlichen Frischwassertank angeordneten) Einfüllöffnung des Frischwassertanks lösbar verbunden zu werden, so dass der Filter unmittelbar vor dem Eintritt des zuzuführenden Wassers in den Frischwassertank mit diesem zuzuführenden Wasser durchströmbar ist. Mit anderen Worten, das Gehäuse des Filtersystems ist fest und starr mit der Einfüllöffnung verbunden, und nicht indirekt mittels eines biegsamen Schlauches oder dergleichen am Frischwassertank angekoppelt. Es befindet sich vor oder in dem Eingang in den Frischwassertank, und nicht stromabwärts desselben. "Fest" bedeutet demnach "nicht flexibel" oder "im wesentlichen steif".

Die Erfindung vermeidet somit die aus dem Stand der Technik bekannten Nachteile. Aufgrund des Verzichts auf den aus dem Stand der Technik bekannten Befüllschlauch bei dem Frischwassertank vorgelagerten Befüllfiltern ist das Totvolumen des Filtersystems minimiert. Aufgrund der Lage direkt an oder in der Einfüllöffnung entleert sich das Gehäuse des Filtersystems weitgehend von selber. Eine eventuell vorhandene, geringe Menge an Restwasser kann durch einfaches Ausschütteln aus dem Filtersystem entfernt werden, so dass ein Verkeimen vermieden wird. Das Filtersystem ist kaum größer als ein normaler Verschlussdeckel für einen Frischwassertank und daher bei Nichtgebrauch leicht verstaubar. Das Anschließen erfolgt auf einfache Weise wie das Anbringen eines Verschlussdeckels. Das Gehäuse sitzt dann dicht auf der Einfüllöffnung, so dass keine Verunreinigungen am Filtersystem vorbei in den Frischwassertank eindringen können. Der Frischwassertank bleibt sauber, da unerwünschte Inhaltsstoffe schon vor dem Einfüllen in den Frischwassertank aus dem Wasser entfernt werden. Ein Wechsel des Filters ist einfach möglich, da das Gehäuse nicht an unzugänglicher Stelle verbaut ist. Die Gefahr der Verschmutzung beim An- und Abkoppeln ist sehr gering.

Nachfolgend werden verschiedene Ausführungsformen der Erfindung näher beschrieben.

Nach einer Ausführungsform wird das Gehäuse des Filtersystems auf die Einfüllöffnung aufgeschraubt oder aufgesteckt. Das bedeutet, dass es z.B. ein Gewinde oder einen Bajonettanschluss aufweist, mittels welchem es fest mit der Einfüllöffnung verbindbar ist. Nach der Benutzung ist es dann durch entgegengesetztes Drehen leicht wieder von dieser lösbar. Es ist klar, dass die entsprechende Ausgestaltung an die Mündung der jeweiligen Einfüllöffnung angepasst sein sollte. In Fällen, in denen diese keine formschlüssig wirkende Anschlussgeometrie aufweist - beispielsweise dann, wenn sie aus einem einfachen, runden Stutzen besteht - ist das Gehäuse so ausgestaltet, dass es dichtend auf diesen aufsteckbar ist. Das Gehäuse kann hierfür eine Öffnung aufweisen, deren Innenwand umlaufend konisch spitz aus- oder zulaufend ausgestaltet ist, um einerseits an unterschiedliche Außendurchmesser von Stutzen anpassbar zu sein, und andererseits durch entsprechende Variation der Aufstecktiefe die Dichtigkeit nach Bedarf justieren zu können. Bevorzugt ist diese Öffnung mit einem elastischen Material ausgekleidet oder besteht daraus.

Nach einer anderen Ausführungsform ist das Gehäuse in die Einfüllöffnung einschraubbar oder in diese einsteckbar. Analog zur vorher beschriebenen Ausführungsform weist es eine der Mündung der Einfüllöffnung entsprechende Befestigungsgeometrie auf, beispielsweise ein Gewinde.

Ist es lediglich teilweise einsteckbar, so kann das Gehäuse einen konisch spitz auslaufenden Befestigungsbereich haben, welcher zum Einstecken in die Einfüllöffnung vorgesehen ist. Bevorzugt ist dieses mit einem elastischen Material ummantelt oder besteht daraus.

Ist es (weitgehend) vollständig einsteckbar, so hat dies den Vorteil, dass auch ein etwas größerer bzw. längerer Filter vorhanden sein kann, ohne dass das Gehäuse weit über die Einfüllöffnung hervorsteht. Stattdessen wird der Großteil (z.B. 80% oder 90%) des Volumens des Gehäuses in der Einfüllöffnung "versteckt", wobei lediglich dafür Sorge zu tragen ist, dass es nicht unbeabsichtigt in den Frischwassertank fällt. Dies kann auf einfache Weise dadurch geschehen, dass am vom Frischwassertank weg weisenden Ende (Einlassseite des Gehäuses) das Gehäuse einen Flansch mit ausreichend großer Breite aufweist, der vorzugsweise ähnlich dem zum Frischwassertank gehörigen Tankdeckel ausgestaltet ist, so dass das Filtersystem von außen kaum noch als solches zu erkennen ist, und außerdem in optimaler Weise vor äußeren Einflüssen geschützt ist. Eine solche Ausführungsform eignet sich demnach besonders gut zum längeren Verbleib in der Einfüllöffnung. Das erfindungsgemäße Filtersystem ersetzt demnach den ursprünglichen Tankdeckel, bzw. stellt ein Filtersystem in Tankdeckelform bereit.

Nach einer besonders bevorzugten Ausführungsform ist das Gehäuse des Filtersystems einen herkömmlichen Tankdeckel ersetzend ausgestaltet. Das bedeutet, dass es anstelle des ursprünglichen Tankdeckels an der Einfüllöffnung des Frischwassertanks anbringbar ist und dort vorzugsweise auch länger, ggf. sogar dauerhaft, verbleibt. Hierzu ist es vorteilhaft, wenn das Gehäuse auf der von der Einfüllöffnung weg weisenden, von außen sichtbaren Seite dem ursprünglichen Tankdeckel ähnelt und diesen insbesondere in den außenseitigen Dimensionen nicht oder nur wenig (z.B. 1 - 3 cm) übersteigt. Ein Hängenbleiben an einem stark überstehenden Gehäuse ist somit vermeidbar.

Das Gehäuse ggf. vergrößernde Komponenten (insbesondere der Filter) sind dann entweder in Richtung des Innenraums der Einfüllöffnung weisend untergebracht (zylindrischer Hohlfilter), und/oder den außenseitigen Umfang und/oder die außenseitige Dicke des Gehäuses lediglich etwas vergrößernd konstruiert, beispielsweise indem ein scheibenförmiger Filter verwendet wird.

Nach einer Ausführungsform umfasst das Filtersystem einen Verschluss zum Verschließen des Einlasses des Gehäuses. Der Verschluss dient somit dem Schutz vor einem unerwünschten Eindringen von Schmutz in den Einlass, und somit in das Filtersystem. Dies ist dann vorteilhaft, wenn das Filtersystem längere Zeit an der Einfüllöffnung des Frischwassertanks verbleibt, beispielsweise auf Campingplätzen.

Nach einer anderen Ausführungsform weist das Gehäuse frischwassertankseitig einen austauschbaren Adapterring zur Anpassung an die Einfüllöffnung auf. Dieser wird vorzugsweise auf das Gehäuse aufgeschraubt. Der Adapterring dient demnach als "Brücke" zwischen einem (Standard-)Gehäuse und der je z.B. nach Fahrzeugmodell unterschiedlichen Geometrie der Einfüllöffnung des Frischwassertanks. Somit kann das Filtersystem auf einfache Weise an unterschiedliche Anschlusstypen angepasst werden, indem lediglich der Adapterring ausgetauscht wird. Je nach Modell kann der Adapterring mehrere (z.B. zwei oder drei) nach innen weisende Pins aufweisen, welche nach Art eines Bajonettverschlusses mit der Einfüllöffnung zusammenwirken.

Während das Gehäuse des Filtersystems neben Metall auch aus Kunststoff gefertigt sein kann, besteht der Adapterring vorzugsweise aus Metall wie Aluminium.

Nach einer weiteren Ausführungsform umfasst das Gehäuse ein Schloss gegen unerlaubtes Öffnen und/oder Entfernen des Filtersystems. Das Schloss dient somit dem Schutz vor einem unerwünschten Öffnen des Frischwassertanks, und/oder dem unerwünschten Entfernen des Filtersystems von demselben. Das Schloss umfasst ein Zugangssystem, welches nur mit entsprechendem Schlüssel oder Zugangscode geöffnet werden kann.

Nach einer bevorzugten Ausführungsform ist der Filter zwischen zwei Hälften des zylindrischen Gehäuses umlaufend kraft- oder formschlüssig fixiert. Die beiden Hälften sind bevorzugt zusammenschraubbar, oder werden mittels entsprechender Schrauben zusammengehalten. Die umlaufende Fixierung des Filters hat den Vorteil, dass ein unerwünschtes Umfließen des Filters weitgehend ausgeschlossen wird.

Der Filter kann ein- oder mehrstufig ausgebildet sein. Ein einstufiger Filter ist insbesondere dann vorteilhaft, wenn entweder Partikel zurückgehalten, oder Inhaltsstoffe neutralisiert werden sollen. Umfassen die Verunreinigungen sowohl Partikel als auch gelöste Stoffe, kann ein mehrstufiger Filter vorteilhaft sein. Es ist klar, dass durch geeignete Gestaltung des Innenraums des Gehäuses Sorge dafür zu tragen ist, dass ein Umfließen der einzelnen Stufen vermieden wird. Dies kann auf einfache Weise dadurch erreicht werden, dass beide Filter scheibenförmig ausgestaltet sind und aufeinander platziert werden, wobei der so vorliegende Filterstapel vorteilhaft durch die vorstehend genannten Hälften des Gehäuses fixiert wird, oder durch ineinander platzierbare Hohlzylinder bereitgestellt ist.

Nach einer weiteren Ausführungsform ist der Einlass und/oder der Auslass des Gehäuses als Schlauchstutzen ausgebildet oder umfasst einen solchen Schlauchstutzen.

Ein als Schlauchstutzen ausgebildeter oder diesen umfassender Einlass bietet eine einfache Möglichkeit des Anschlusses des Filtersystems an einen Wasserschlauch, wie er häufig zum Zapfen von Wasser zur Verfügung steht. Vorzugsweise ist dieser Schlauchstutzen so bemessen, dass er im Inneren der für die Einfüllöffnung des Frischwassertanks vorgesehenen Geometrie des Auslasses Platz findet. Somit kann das Filtersystem wahlweise in der vorbeschriebenen Weise, als auch mit einem auslassseitigen Schlauchstück versehen verwendet werden.

Ist außerdem ein als Schlauchstutzen ausgebildeter Auslass vorhanden, so bietet dies die Möglichkeit, das Filtersystem in alternativer Weise wie den eingangs beschriebenen Befüllfilter zu verwenden. Ein solches Filtersystem kann demnach einlass- und auslassseitig an einen Schlauch angekoppelt werden, um beliebige andere Gefäße mit gefiltertem Wasser befüllen zu können. Der als Schlauchstutzen ausgebildete Auslass kann auch in Form eines Adapterringes am Gehäuse anbringbar sein.

Nach einer weiteren Ausführungsform umfasst das Filtersystem einen Überlauf, durch welchen überschüssig eingefülltes Wasser aus dem Frischwassertank entfernbar ist. Somit kann der Frischwassertank vollkommen befüllt werden, ohne dass die Gefahr des Berstens aufgrund ansteigenden Innendrucks besteht, wenn das Wasser aus einer unter Druck stehenden Quelle einströmt, was häufig der Fall ist. Zugleich ist das Gehäuse dicht und hygienisch einwandfrei mit der Einfüllöffnung verbunden, im Gegensatz zu einem lose eingehängten Schlauch.

Der Überlauf kann als Ein-Wege-Ventil, beispielsweise als einfaches Lippenventil, ausgestaltet sein, welches neben dem zum Einfüllen vorgesehenen Fluidpfad angeordnet ist. Dieses öffnet entgegen der Befüllrichtung, sobald ein bestimmter (geringer, z.B. 0,1 bar betragender) Überdruck überschritten wird.

Um unkontrolliertes Umherspritzen überschüssigen Wassers zu vermeiden, kann der Ausgang des Überlaufs ausrichtbar ausgestaltet sein, beispielsweise durch ein drehbares, abgewinkeltes Endstück oder einen Abflussschlauch, der an eine geeignete Stelle geführt werden kann.

Nach einer Ausführungsform umfasst das Filtersystem ein Sichtglas, mittels dessen der im Gehäuse angeordnete Filter inspizierbar ist. Es ist klar, dass insbesondere die dem Einlass zugewandte Seite des Filters sichtbar sein sollte, da diese besonders deutlich den Zustand des Filters zeigt, um auf einfache Weise einen geeigneten Zeitpunkt zum Austausch oder Reinigen des Filters bestimmen zu können.

Die Erfindung betrifft auch ein Verfahren zum Entfernen von unerwünschten Inhaltsstoffen aus einem Frischwasserstrom, der einen Frischwassertank eines Fahrzeugs befüllt. Das Entfernen erfolgt unter Verwendung eines derartige Inhaltsstoffe zurückhaltenden und/oder neutralisierenden Filters mit einem Gehäuse.

Dabei wird zunächst das diesen Filter umgebendes, einen Einlass und einen Auslass aufweisendes Gehäuse unmittelbar mit seinem Auslass an oder in der Einfüllöffnung des Frischwassertanks angeordnet. "Unmittelbar" bedeutet hier, dass das Gehäuse mechanisch direkten Kontakt mit der Einfüllöffnung hat, und nicht indirekt, beispielsweise mittels eines zwischen Auslass des Gehäuses und Einfüllöffnung des Frischwassertanks angeordneten Schlauchstücks. Ebenso wird der Auslass nicht bloß so platziert (z.B. mit der Hand gehalten), damit das ihm entströmende Wasser die Lücke zur Einfüllöffnung in freiem Fall überbrücken soll, sondern dichtend verriegelt. Dies kann z.B. durch Aufstecken und fixierendes Drehen des Gehäuses auf den Verschluss der Einfüllöffnung erreicht werden.

Danach wird der Frischwasserstrom freigegeben, so dass dieser den Filter unmittelbar vor dem Eintritt in den Frischwassertank durchströmt. Die daraus erwachsenen Vorteile wurden bereits weiter oben diskutiert.

Bevorzugt erfolgt die Durchführung des erfindungsgemäßen Verfahrens unter Verwendung des oben beschriebenen Filtersystems. Ein solches Filtersystem stellt alle zur Durchführung des erfindungsgemäßen Verfahrens notwendigen Komponenten in vorteilhafter Weise bereit.

### Figurenbeschreibung

Nachfolgend wird die Erfindung anhand von Figuren beispielhaft erläutert. Dabei zeigt
- **Figur 1**: eine schematische Darstellung eines Filtersystems aus dem Stand der Technik, verbunden über ein Schlauchstück mit der Einfüllöffnung des Frischwassertanks eines Fahrzeugs;
- **Figur 2**: eine schematische Darstellung eines erfindungsgemäßen Filtersystems, angeordnet an der Einfüllöffnung des Frischwassertanks eines Fahrzeugs;
- **Figur 3**: eine schematische Darstellung eines erfindungsgemäßen Filtersystems mit aufsteckbarem Gehäuse;
- **Figur 4**: eine schematische Detailansicht eines aufsteckbaren Auslasses;
- **Figur 5**: eine schematische Detailansicht eines einsteckbaren Filtersystems;
- **Figur 6**: eine schematische Detailansicht eines weiteren einsteckbaren Auslasses;
- **Figur 7**: eine Explosionsansicht einer bevorzugten Ausführungsform des erfindungsgemäßen Filtersystems als Schnittansicht;
- **Figur 8**: die Ausführungsform nach Fig. 7 als Zusammenbau in Schnittansicht;
- **Figur 9**: die Ausführungsform nach Fig. 7 als Zusammenbau als Außenansicht.

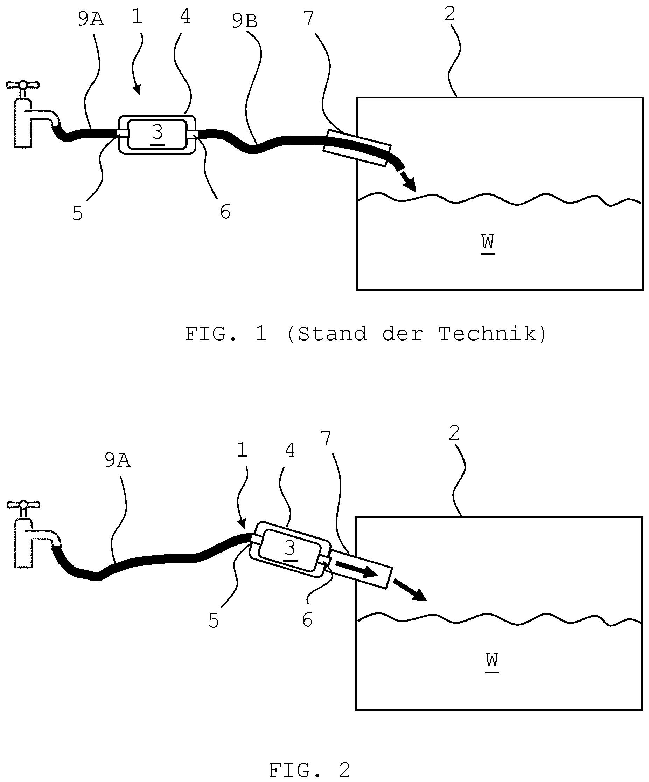

Die **Figur 1** zeigt eine schematische Darstellung eines Filtersystems aus dem Stand der Technik, verbunden über ein Schlauchstück mit der Einfüllöffnung des Frischwassertanks eines Fahrzeugs.

Das Filtersystem 1 umfasst ein Gehäuse 4, in welchem ein Filter 3 angeordnet ist. Sowohl an einem Einlass 5, als auch an einem Auslass 6 ist ein Schlauchstück 9A, 9B angeordnet. Schlauchstück 9A ist mit einer Frischwasserquelle (hier: Wasserhahn), und Schlauchstück 9B ist mit der Einfüllöffnung 7 eines Frischwassertanks 2 eines Fahrzeugs (nicht dargestellt) verbunden.

Wasser W durchströmt demnach zuerst Schlauchstück 9A, dann das Gehäuse 4 mit Filter 3, und anschließend noch Schlauchstück 9B, bevor es in den Frischwassertank 2 eintritt (angedeutet durch den dicken Pfeil). Wie ersichtlich, ist das Ende von Schlauchstück 9B einfach lose durch die Einfüllöffnung 7 geführt und ragt in das Innere des Frischwassertanks 2 hinein, was aus hygienischer Sicht bedenklich ist.

Die **Figur 2** zeigt eine schematische Darstellung eines erfindungsgemäßen Filtersystems, angeordnet an der Einfüllöffnung des Frischwassertanks eines nicht dargestellten Fahrzeugs.

Die Bezugszeichen der Fig. 2 beziehen sich in analoger Weise auf die entsprechen Komponenten der Fig. 1. Im Gegensatz zu der in der Fig. 1 gezeigten Lösung des Standes der Technik ist nunmehr das Gehäuse 4 dazu eingerichtet, "unmittelbar" mit einer Einfüllöffnung 7 des Frischwassertanks 2 verbunden zu werden. Ein wie auch immer geartetes Schlauchstück zwischen Gehäuse 4 und Einfüllöffnung 7 ist nicht vorhanden. Das Gehäuse ist somit mechanisch direkt an die Einfüllöffnung 7 angekoppelt.

Somit wird der Filter 3 unmittelbar vor dem Eintritt des zuzuführenden Wassers W in den Frischwassertank 2 mit dem Wasser W durchströmt. Das Wasser W verlässt das Gehäuse 4, und tritt sofort in die Einfüllöffnung 7 und somit den Frischwassertank 2 ein. Es passiert kein zwischengeschaltetes Schlauchstück, und es wird auch nicht etwa eingespritzt, wobei der Strahl ein Stück frei durch die Luft verlaufen würde.

Die erfindungsgemäße Lösung ist somit hygienisch einwandfrei, sofern dafür Sorge getragen wird, dass keine Fremdkörper am Übergang zwischen Auslass 6 und Einfüllöffnung 7 vorbei in den Frischwassertank 2 gelangen können, was durch geeignete Dichtungen bewerkstelligbar ist.

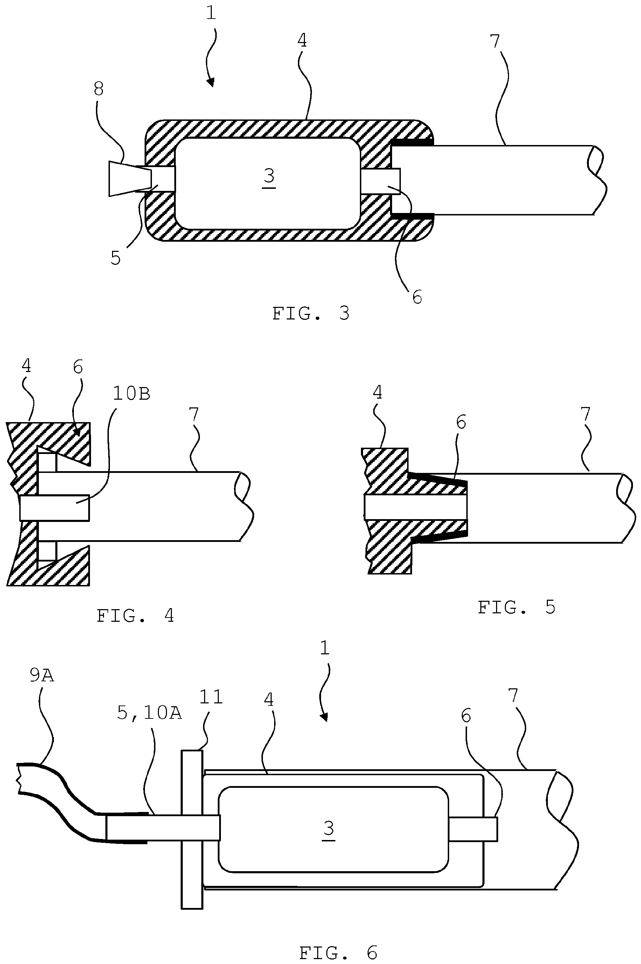

In **Figur 3** ist eine schematische Darstellung eines erfindungsgemäßen Filtersystems mit aufsteckbarem Gehäuse gezeigt. Das Filtersystem 1 weist einen Auslass 6 auf, der auf die Einfüllöffnung 7 des (nicht gezeigten) Frischwassertanks aufsteckbar ist. Zur Befestigung kann ein Gewinde oder ein Bajonettverschluss vorhanden sein (nicht dargestellt), oder die Befestigung erfolgt kraft- und reibschlüssig, indem der Teil des Gehäuses 4, der die Einfüllöffnung 7 umschließt, aus einem elastischen Material besteht oder damit ausgekleidet ist, angedeutet durch die dicken Linien.

Erkennbar ist ferner ein schematisch dargestellter Verschluss 8, mittels dem der Einlass 5 des Gehäuses 4 verschlossen werden kann.

In der **Figur 4** ist eine schematische Detailansicht eines aufsteckbaren Auslasses gezeigt. Dessen Innenwand ist umlaufend konisch spitz zulaufend ausgestaltet, um einerseits an unterschiedliche Außendurchmesser von Einfüllöffnungen 7 anpassbar zu sein, und andererseits durch entsprechende Variation der Aufstecktiefe die Dichtigkeit nach Bedarf justieren zu können.

Die Fig. 4 zeigt außerdem einen Auslass 6, welcher mit einem Schlauchstutzen 10B versehen ist. Dieser Schlauchstutzen 10B ist so bemessen, dass er im Inneren der für die Einfüllöffnung 7 des Frischwassertanks vorgesehenen Geometrie des Auslasses 6 Platz findet. Somit kann das Filtersystem 1 wahlweise in der vorbeschriebenen Weise, als auch mit einem auslassseitigen Schlauchstück (nicht gezeigt) versehen verwendet werden.

In der **Figur 5** ist eine schematische Detailansicht eines einsteckbaren Auslasses gezeigt. Dieser wird mit seinem konisch spitz zulaufenden Ende in die Mündung der Einfüllöffnung 7 eingesteckt. Seine Außenwand ist mit einem elastischen Material umhüllt (dicke Linien). Aufgrund der Konizität kann das Filtersystem in Einfüllöffnungen unterschiedlicher Durchmesser eingesteckt werden.

In der **Figur 6** ist eine schematische Detailansicht eines einsteckbaren Filtersystems gezeigt. Dieses ist nahezu vollständig in die Einfüllöffnung 7 einsteckbar. An seinem einlassseitigen Ende ist ein Flansch 11 mit ausreichend großer Breite angeordnet, so dass das Filtersystem 1 nicht versehentlich zu weit in die Einfüllöffnung 7 geschoben werden kann. Zudem bietet der Flansch 11 die Möglichkeit der Bereitstellung von Befestigungsmitteln (nicht gezeigt) an der Mündung der Einfüllöffnung 7. Besonders bevorzugt ist der Flansch 11 so ausgestaltet, dass er wie ein herkömmlicher Tankdeckel an der Mündung befestigbar ist. Er übersteigt dessen außenseitige Dimensionen nur unwesentlich, so dass er prinzipiell diesen ersetzend und dauerhaft an der Einfüllöffnung7 verbleiben kann.

Die Fig. 6 zeigt außerdem einen Schlauchstutzen 10A, der am Einlass 5 angeordnet ist. An diesem kann ein Wasser zuführendes Schlauchstück 9A angeschlossen werden.

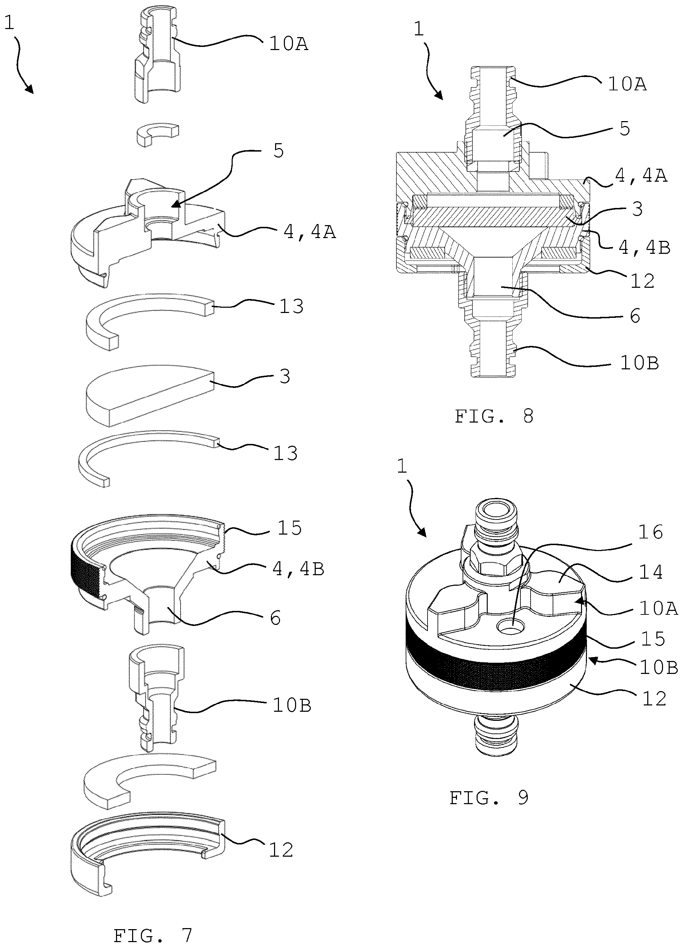

In der **Figur 7** ist eine Explosionsansicht einer bevorzugten Ausführungsform des erfindungsgemäßen Filtersystems dargestellt.

Das den scheibenförmigen Filter 3 umfassende Gehäuse 4 besteht aus zwei Hälften 4A, 4B. Zwischen diesen ist der Filter 3 fixierbar. Zur besseren Flüssigkeitsverteilung sind dichtende Distanzringe 13 vorhanden, die vor und hinter dem Filter 3 angeordnet sind und diesen stirnseitig vom Gehäuse 4 beabstanden. Einlass 5 und Auslass 6 münden in einen Schlauchstutzen 10A bzw. 10B, an welchen ein handelsüblicher Schlauch anschließbar ist. Das auslassseitige Ende umfasst einen Adapterring 12, welcher zur Anpassung an die Einfüllöffnung 7 (nicht gezeigt) dient.

Zum verbesserten Ablauf ist die auslassseitige Hälfte 10B des Gehäuses 3 trichterförmig ausgestaltet. Außerdem umfasst das Filtersystem 1 an geeigneter Stelle Dichtungen (ohne Bezugszeichen).

In der **Figur 8** ist die Ausführungsform nach Fig. 7 als Zusammenbau in Schnittansicht dargestellt. Nur einige der Komponenten sind mit Bezugszeichen versehen.

Die **Figur 9** schließlich zeigt die vorgenannte Ausführungsform im Zusammenbau. Gut ist die sehr kompakte Bauform des Filtersystems erkennbar. Zum einfachen Öffnen des Gehäuses 4 weist dieses an einer Hälfte 10A Flügel 14, und an der anderen Hälfte 10B eine gerändelte (aufgeraute) Mantelfläche 15 auf. Einige der Bezugszeichen wurden aus Gründen der Übersichtlichkeit weggelassen. Erkennbar ist außerdem ein Sichtglas 16, mittels dessen der im Gehäuse 4 angeordnete Filter 3 inspizierbar ist.

Die Dimensionen des Filtersystems 1 entsprechen in etwa denen eines herkömmlichen Tankdeckels (nicht dargestellt) und erlauben daher ggf. ein auch dauerhaftes Ersetzen desselben.

### Bezugszeichenliste

- 1: Filtersystem
- 2: Frischwassertank
- 3: Filter
- 4: Gehäuse
- 4A,4B: Hälfte
- 5: Einlass
- 6: Auslass
- 7: Einfüllöffnung
- 8: Verschluss
- 9A,9B: Schlauchstück
- 10A,10B: Schlauchstutzen
- 11: Flansch
- 12: Adapterring
- 13: Distanzring
- 14: Flügel
- 15: Mantelfläche
- 16: Sichtglas
- W: Wasser

## Patentansprüche

1. Filtersystem (1) für den Frischwassertank (2) eines Fahrzeugs, umfassend einen Filter (3) zum Zurückhalten und/oder Neutralisieren von im zuzuführenden Wasser (W) enthaltenen unerwünschten Inhaltsstoffen, sowie ein diesen Filter (3) umgebendes, einen Einlass (5) und einen Auslass (6) aufweisendes Gehäuse (4), **dadurch gekennzeichnet, dass** das Gehäuse (4) dazu eingerichtet ist, unmittelbar mit der Einfüllöffnung (7) des Frischwassertanks (2) lösbar verbunden zu werden, so dass der Filter (3) unmittelbar vor dem Eintritt des zuzuführenden Wassers in den Frischwassertank (2) mit diesem durchströmbar ist.

2. Filtersystem (1) nach Anspruch 1, wobei das Gehäuse (4) auf die Einfüllöffnung (7) aufgeschraubt oder aufgesteckt wird.

3. Filtersystem (1) nach Anspruch 1, wobei das Gehäuse (4) in die Einfüllöffnung (7) eingeschraubt oder eingesteckt wird.

4. Filtersystem (1) nach einem der vorhergehenden Ansprüche, wobei das Gehäuse (4) einen herkömmlichen Tankdeckel ersetzend ausgestaltet ist.

5. Filtersystem (1) nach einem der vorhergehenden Ansprüche, ferner umfassend einen Verschluss (8) zum Verschließen des Einlasses (5) des Gehäuses (4).

6. Filtersystem (1) nach einem der vorhergehenden Ansprüche, wobei das Gehäuse (4) frischwassertankseitig einen austauschbaren Adapterring (12) zur Anpassung an die Einfüllöffnung (7) aufweist.

7. Filtersystem (1) nach einem der vorhergehenden Ansprüche, wobei das Gehäuse (4) ein Schloss gegen unerlaubtes Öffnen und/oder Entfernen des Filtersystems (1) umfasst.

8. Filtersystem (1) nach einem der vorhergehenden Ansprüche, wobei der Filter (3) zwischen zwei Hälften (4A, 4B) des zylindrischen Gehäuses (4) umlaufend kraft- oder formschlüssig fixiert ist.

9. Filtersystem (1) nach einem der vorhergehenden Ansprüche, wobei der Filter (3) ein- oder mehrstufig ausgebildet ist.

10. Filtersystem (1) nach einem der vorhergehenden Ansprüche, wobei der Einlass (5) und/oder der Auslass (6) des Gehäuses (4) als Schlauchstutzen (10A, 10B) ausgebildet ist.

11. Filtersystem (1) nach einem der vorhergehenden Ansprüche, wobei dasselbe einen Überlauf umfasst, durch welchen überschüssig eingefülltes Wasser (W) aus dem Frischwassertank (2) entfernbar ist.

12. Filtersystem (1) nach einem der vorhergehenden Ansprüche, wobei dasselbe ein Sichtglas (16) umfasst, mittels dessen der im Gehäuse (4) angeordnete Filter (3) inspizierbar ist.

13. Verfahren zum Entfernen von unerwünschten Inhaltsstoffen aus einem einen Frischwassertank (2) eines Fahrzeugs befüllenden Frischwasserstrom unter Verwendung eines derartige Inhaltsstoffe zurückhaltenden und/oder neutralisierenden Filters (3) mit einem diesen Filter (3) umgebenden, einen Einlass (5) und einen Auslass (6) aufweisenden Gehäuse (4), wobei zunächst das Gehäuse (4) mit seinem Auslass (6) unmittelbar an oder in der Einfüllöffnung (7) des Frischwassertanks (2) angeordnet wird, wonach der Frischwasserstrom freigegeben wird, so dass dieser den Filter (3) unmittelbar vor dem Eintritt in den Frischwassertank (2) durchströmt.

14. Verfahren nach Anspruch 13 unter Verwendung eines Filtersystems (1) nach einem der Ansprüche 1 bis 12.

## Geänderte Patentansprüche

### Geänderte Patentansprüche gemäss Regel 137(2) EPÜ.

1. Filtersystem (1) für den Frischwassertank (2) eines Fahrzeugs, umfassend einen Filter (3) zum Zurückhalten und/oder Neutralisieren von im zuzuführenden Wasser (W) enthaltenen unerwünschten Inhaltsstoffen, sowie ein diesen Filter (3) umgebendes, einen Einlass (5) und einen Auslass (6) aufweisendes Gehäuse (4), **dadurch gekennzeichnet, dass** das Gehäuse (4) dazu eingerichtet ist, unmittelbar mit der Einfüllöffnung (7) des Frischwassertanks (2) lösbar verbunden zu werden, so dass der Filter (3) unmittelbar vor dem Eintritt des zuzuführenden Wassers in den Frischwassertank (2) mit diesem durchströmbar ist.

2. Filtersystem (1) nach Anspruch 1, wobei das Gehäuse (4) auf die Einfüllöffnung (7) aufgeschraubt oder aufgesteckt wird.

3. Filtersystem (1) nach Anspruch 1, wobei das Gehäuse (4) in die Einfüllöffnung (7) eingeschraubt oder eingesteckt wird.

4. Filtersystem (1) nach einem der vorhergehenden Ansprüche, wobei das Gehäuse (4) einen herkömmlichen Tankdeckel ersetzend ausgestaltet ist.

5. Filtersystem (1) nach einem der vorhergehenden Ansprüche, ferner umfassend einen Verschluss (8) zum Verschließen des Einlasses (5) des Gehäuses (4).

6. Filtersystem (1) nach einem der vorhergehenden Ansprüche, wobei das Gehäuse (4) frischwassertankseitig einen austauschbaren Adapterring (12) zur Anpassung an die Einfüllöffnung (7) aufweist.

7. Filtersystem (1) nach einem der vorhergehenden Ansprüche, wobei das Gehäuse (4) ein Schloss gegen unerlaubtes Öffnen und/oder Entfernen des Filtersystems (1) umfasst.

8. Filtersystem (1) nach einem der vorhergehenden Ansprüche, wobei der Filter (3) zwischen zwei axial voneinander trennbaren Hälften (4A, 4B) des zylindrischen Gehäuses (4) umlaufend kraft- oder formschlüssig fixiert ist.

9. Filtersystem (1) nach einem der vorhergehenden Ansprüche, wobei der Filter (3) ein- oder mehrstufig ausgebildet ist.

10. Filtersystem (1) nach einem der vorhergehenden Ansprüche, wobei der Einlass (5) und/oder der Auslass (6) des Gehäuses (4) als Schlauchstutzen (10A, 10B) ausgebildet ist.

11. Filtersystem (1) nach einem der vorhergehenden Ansprüche, wobei dasselbe ein Sichtglas (16) umfasst, mittels dessen der im Gehäuse (4) angeordnete Filter (3) inspizierbar ist.

12. Verfahren zum Entfernen von unerwünschten Inhaltsstoffen aus einem einen Frischwassertank (2) eines Fahrzeugs befüllenden Frischwasserstrom unter Verwendung eines derartige Inhaltsstoffe zurückhaltenden und/oder neutralisierenden Filters (3) mit einem diesen Filter (3) umgebenden, einen Einlass (5) und einen Auslass (6) aufweisenden Gehäuse (4), wobei zunächst das Gehäuse (4) mit seinem Auslass (6) unmittelbar an oder in der Einfüllöffnung (7) des Frischwassertanks (2) angeordnet wird, wonach der Frischwasserstrom freigegeben wird, so dass dieser den Filter (3) unmittelbar vor dem Eintritt in den Frischwassertank (2) durchströmt.

13. Verfahren nach Anspruch 12 unter Verwendung eines Filtersystems (1) nach einem der Ansprüche 1 bis 11.
